# FASCICULE DE BREVET EUROPEEN

(11) **EP 2 799 666 B1**
(45) Date de publication et mention de la délivrance du brevet: **24.10.2018**
(21) Numéro de dépôt: 14001276.6
(22) Date de dépôt: 08.04.2014
(51) Int. Cl.: F01D 9/02, F02C 7/08

(54) **Volute à deux volumes pour turbine à gaz**
Spiralgehäuse mit zwei Volumina für Gasturbine
Volute casing with two volumes for gas turbine

(30) Priorité: 30.04.2013 FR 1301004
(43) Date de publication de la demande: 05.11.2014
(73) Titulaire: Airbus Helicopters, 13725 Marignane Cedex (FR)
(72) Inventeur: Honnorat, Olivier, F-13290 AIX EN Provence (FR); Dubourg, Christophe, F-13100 LE Tholonet (FR); Krysinski, Jan, PL-94-118 Lodz (PL)
(74) Mandataire: GPI & Associés

(56) Documents cités:
- CH-A- 248 924
- DE-A1- 19 653 057
- GB-A- 563 918
- GB-A- 2 250 780
- US-A- 2 801 043
- US-A1- 2013 000 300

## Description

La présente invention se trouve dans le domaine des turbines à gaz. L'invention concerne une volute à deux volumes. Cette volute à deux volumes est particulièrement destinée à une turbine à gaz afin de conduire l'air d'admission entre la turbine à gaz et un échangeur thermique. L'invention concerne également une turbine à gaz équipée de cette volute à deux volumes ainsi qu'un aéronef à voilure tournante motorisé par une ou plusieurs de ces turbines à gaz.

Il est connu que le rendement des turbines à gaz est relativement faible. Notamment pour les turbomoteurs, type particulier de turbines à gaz utilisées traditionnellement pour les hélicoptères, ce rendement est de l'ordre de 25%.

Une solution connue pour améliorer ce rendement est de réchauffer l'air, après compression et avant son admission dans la chambre de combustion de la turbine à gaz. Cela permet alors de réduire le besoin thermique dans la chambre de combustion, et par suite, de réduire la consommation en carburant de cette turbine à gaz.

Ce réchauffement de l'air d'admission peut notamment être obtenu en utilisant la chaleur des gaz d'échappement sortant de la chambre de combustion, cette chaleur n'étant généralement pas utilisée. Pour cela, des échangeurs thermiques adaptés sont notamment utilisés dans les centrales thermiques industrielles.

Par contre, l'utilisation de tels échangeurs au domaine spécifique des giravions et des hélicoptères notamment se heurte à plusieurs problèmes majeurs, tels que la masse et le volume de ces échangeurs ainsi qu'une perte de puissance de la turbine à gaz utilisant un tel échangeur.

D'une part, les gaz d'échappement sortent de la chambre de combustion d'une turbine à gaz à grande vitesse et leur circulation dans un échangeur thermique récupérant une partie de leur chaleur génère des pertes de charge importantes sur ces gaz d'échappement qui entraînent alors une perte de puissance de la turbine à gaz.

D'autre part, le passage de l'air comprimé sortant du compresseur par l'échangeur thermique avant d'être injecté dans la chambre de combustion est également générateur de pertes de charge importantes sur cet air comprimé pénalisant les performances de la turbine à gaz.

De plus, le volume disponible dans un hélicoptère étant restreint, l'implantation d'un échangeur thermique sur une turbine à gaz pose des problèmes d'encombrement. Enfin, la masse supplémentaire consécutive à l'intégration de cet échangeur thermique est également un critère important affectant les performances de l'hélicoptère.

On connait le document US 5182904 qui décrit une turbine à gaz dont les gaz d'échappement peuvent être dirigés par l'intermédiaire d'un système de valves circulaires vers un premier ou un second flux, en fonction de la puissance souhaitée pour cette turbine à gaz. Suivant le premier flux, les gaz d'échappement entraînent plusieurs turbocompresseurs qui compriment l'air ambiant avant de le diriger vers un compresseur centrifuge. Selon le second flux, les gaz d'échappement sont dirigés vers des échangeurs thermiques afin de réchauffer l'air comprimé sortant du compresseur centrifuge avant leur injection dans la chambre de combustion. Une conduite circonférentielle dirige l'air comprimé de la sortie de chaque échangeur thermique vers la chambre de combustion, les échangeurs thermiques et les compresseurs étant positionnés en parallèle du compresseur centrifuge et de la chambre de combustion.

Par ailleurs, le document EP 1621742 divulgue une turbine à gaz comportant un échangeur thermique annulaire positionné en série avec cette turbine à gaz, et plus précisément dans la tuyère d'échappement. Deux conduites axiales dirigent l'air d'admission comprimé d'un collecteur circonférentiel du compresseur vers l'échangeur thermique, deux autres conduites axiales dirigeant l'air d'admission comprimé et réchauffé de l'échangeur thermique vers un diffuseur circonférentiel de la chambre de combustion. Cependant, les pertes de charge sont importantes, notamment aux niveaux des passages entre les conduites et respectivement le collecteur et le diffuseur ainsi qu'entre les conduites et l'échangeur thermique, un coude avec un angle de l'ordre de 90° devant être suivi par le flux d'air d'admission comprimé.

On connait aussi le document US 2801043 qui décrit un compresseur muni d'une conduite circonférentielle comportant deux volumes séparés par une cloison faisant office d'isolant thermique. La conduite circonférentielle comporte une ouverture radiale en son centre et deux ouvertures tangentielles diamétralement opposées, chaque volume comportant une ouverture tangentielle.

De plus, le document DE 19653057 décrit une conduite circonférentielle alimentant en air une turbine. Cette conduite circonférentielle comporte une sortie en son centre et une entrée tangentielle divisée en quatre entrées d'air. L'air peut circuler dans des volumes isolés au niveau de l'entrée tangentielle et se regroupe au niveau de la sortie centrale.

En outre, les documents GB 563918 et CH 248924 décrivent une machine thermique dont le compresseur et la turbine sont accolés formant ainsi une conduite circonférentielle munie de deux volumes indépendants et séparés par une cloison. Une ouverture centrale de cette conduite comporte également une séparation afin d'être partagée entre les deux volumes. L'air comprimé entre dans un premier volume par l'ouverture centrale puis est dirigé vers une chambre de combustion. Ensuite, des gaz brûlés entre dans le second volume et sorte par l'ouverture centrale.

Enfin, le document US 2009/0282804 décrit une turbine à gaz comportant un échangeur thermique annulaire positionné en parallèle avec cette turbine à gaz, et plus précisément autour de la chambre de combustion. Cet échangeur thermique comporte trois flux différents, deux flux dirigeant l'air comprimé du compresseur vers la chambre de combustion et un flux de gaz d'échappement permettant de réchauffer cet air comprimé. L'échangeur thermique étant positionné autour de la chambre de combustion, cette turbine à gaz est relativement compacte. Par contre, les flux d'air comprimé et de gaz d'échappement subissent des pertes de charge importantes pour passer dans cet échangeur thermique et en sortir.

Le document US2801043 divulgue une volute à deux volumes pour une turbine à gaz connue dans l'art antérieur. On constate donc que des solutions existent pour l'utilisation d'échangeurs thermiques afin d'améliorer le rendement d'une turbine à gaz.

Par contre, les pertes de charge subies aussi bien par les gaz d'échappement que par l'air d'admission comprimé dans le cas de l'utilisation d'un tel échangeur thermique sont importantes. Ces pertes de charge entraînent alors une perte de puissance de la turbine à gaz et peuvent être préjudiciables notamment pour certaines phases de vol particulières, telles que les phases de décollage, d'atterrissage et de vol stationnaire, dans le cas d'un giravion.

La présente invention a alors pour objet de proposer une volute circonférentielle pour une turbine à gaz permettant de limiter notamment les pertes de charge de l'air d'admission comprimé.

On entend par volute une conduite en forme d'enroulement ou de spirale.

Selon l'invention, une volute à deux volumes pour une turbine à gaz comporte une conduite circonférentielle en forme de spirale et deux ouvertures. Une première ouverture est agencée de façon tangentielle à cette conduite circonférentielle vers l'extérieur de cette conduite circonférentielle alors qu'une seconde ouverture circonférentielle est agencée au centre de cette conduite circonférentielle.

De fait, grâce à cette forme en spirale de la conduite circonférentielle, un fluide circulant dans cette volute à deux volumes s'écoule tangentiellement à cette conduite circonférentielle. Ce fluide a par contre un écoulement linéaire en traversant la première ouverture entre la conduite circonférentielle et un volume extérieur à cette conduite circonférentielle alors que ce fluide a un écoulement radial en traversant la seconde ouverture circonférentielle entre cette conduite circonférentielle et un volume intérieur à cette conduite circonférentielle.

Cette volute à deux volumes est remarquable en ce que qu'elle comporte une paroi séparant la conduite circonférentielle en deux volumes distincts, la paroi sépare également lesdites première et seconde ouvertures respectivement en deux premières ouvertures et en deux secondes ouvertures. Ainsi un premier fluide et un second fluide peuvent circuler indépendamment et de façon isolée entre la première ouverture et la seconde ouverture.

Si les deux fluides circulant respectivement dans chaque volume de cette conduite circonférentielle sont notamment à une même pression, il y a équilibrage de la pression des deux fluides de part et d'autre de cette paroi. De fait, cette paroi travaille peu mécaniquement et n'est soumise qu'à de faibles contraintes. En conséquence, les caractéristiques mécaniques de cette paroi peuvent être faibles et cette paroi peut être de faible épaisseur.

Avantageusement, cette paroi mince permet également un échange thermique entre le premier fluide et le second fluide circulant respectivement dans les deux volumes de la conduite circonférentielle. De plus, la différence de pression entre les deux fluides étant faible, l'épaisseur de cette paroi peut éventuellement être réduite.

Par exemple, la conduite circonférentielle a une épaisseur de 0.8mm (0.8 millimètre) alors que l'épaisseur de la paroi peut être comprise entre 0.4 à 0.8mm, la matière de cette paroi et de la conduite circonférentielle étant alors de l'acier inoxydable ou bien de l'Inconel®.

Cette volute à deux volumes peut ainsi remplacer deux conduites indépendantes utilisées traditionnellement, générant ainsi une réduction de masse et de l'encombrement d'un tel dispositif. De plus, cette seule volute à deux volumes est plus simple à implanter que deux conduites indépendantes.

Avantageusement, la forme en spirale de la conduite circonférentielle permet de transformer un écoulement linéaire d'un fluide entrant par la première ouverture dans cette conduite circonférentielle en un écoulement tangentiel tout en limitant les pertes de charge de ce fluide qui peuvent apparaître lors d'une telle transformation. De même, cette forme en spirale de la conduite circonférentielle permet de transformer un écoulement radial d'un fluide entrant par la seconde ouverture dans cette conduite circonférentielle en un écoulement tangentiel tout en limitant les pertes de charge de ce fluide. Un tel avantage se retrouve également pour un fluide sortant par la première ouverture ou par la seconde ouverture, cette forme en spirale permettant de transformer un écoulement tangentiel de ce fluide dans la conduite circonférentielle respectivement en un écoulement linéaire ou radial tout en limitant les pertes de charge de ce fluide.

De plus, des aubes peuvent être positionnées au niveau de la seconde ouverture circonférentielle afin de faciliter la transformation d'un écoulement radial d'un fluide entrant par la seconde ouverture en un écoulement tangentiel dans la conduite circonférentielle. Ces aubes permettent ainsi de réduire également les pertes de charge qui peuvent apparaître lors du passage d'un fluide par cette seconde ouverture et de la transformation de l'écoulement qui s'y produit.

Des aubes peuvent éventuellement être également positionnées au niveau de la seconde ouverture circonférentielle afin de faciliter le passage d'un écoulement sortant de la conduite circonférentielle.

En outre, la position et la forme des aubes peuvent être différentes suivant que le fluide entre ou sort par cette seconde ouverture afin d'optimiser la transformation de l'écoulement de ce fluide.

Par suite, les pertes de charge des fluides circulant dans ces deux volumes de la volute à deux volumes sont limitées.

De plus, ces deux volumes peuvent être égaux, voire symétriques.

Enfin, la conduite circonférentielle peut être en forme de goutte d'eau afin d'optimiser les écoulements des fluides à l'intérieur de la volute à deux volumes. Cette forme de goutte d'eau assure une bonne répartition des déformations liées à la pression des fluides circulant dans chaque volume de cette conduite circonférentielle. Ces déformations restent acceptables même avec des tôles minces lorsque les fluides ont des pressions de l'ordre de 8 bars par exemple. Ainsi, les pertes de charge de ces fluides circulant dans la conduite circonférentielle sont limitées.

A contrario, si la conduite circonférentielle comporte par exemple des arêtes vives telle qu'une conduite à section de type rectangulaire, des turbulences peuvent apparaître au niveau des écoulements des fluides perturbant alors ces écoulements et générant des concentrations de contraintes au niveau de ces arêtes vives. Par exemple, des zones de turbulences secondaires importantes, avec création de tourbillons quasi stationnaires peuvent apparaître dans les coins d'une telle conduite et être alors générateur de pertes de charge importantes.

De plus, une telle forme de conduite circonférentielle à section de type rectangulaire et comportant des arêtes vives peut être difficile à mettre en forme selon la matière utilisée et conduire alors à l'utilisation de tôles plus épaisses.

La gestion de l'étanchéité est aussi un élément délicat de l'intégration des conduites, notamment entre les conduites et/ou entre chaque conduite et l'extérieur. Avantageusement, l'utilisation d'une seule conduite séparée par une paroi facilite cette étanchéité. Cette étanchéité peut par exemple être réalisée par un joint métallique ou un très bon état de surface.

De préférence, la conduite circonférentielle est composée de deux demi-conduites circonférentielles en forme de spirale, reliées l'une à l'autre au niveau de la paroi. Deux demi-conduites circonférentielles sont en effet plus faciles à mettre en forme. De plus, la paroi est également plus facile à mettre en place entre ces deux demi-conduites circonférentielles. De même, l'étanchéité entre cette paroi et les deux demi-conduites circonférentielles est plus facile à réaliser.

La volute à deux volumes selon l'invention peut notamment être utilisée sur une turbine à gaz. Une turbine à gaz comporte généralement un compresseur par exemple de type compresseur centrifuge comprimant l'air ambiant, une chambre de combustion dans laquelle est brûlé un mélange contenant cet air ambiant comprimé et un carburant ainsi qu'une turbine de détente qui permet de transformer l'énergie contenue dans les gaz brûlés en énergie mécanique et une conduite d'échappement par laquelle les gaz d'échappement sont évacués. Cette turbine à gaz peut également comporter un échangeur thermique permettant au gaz d'échappement de réchauffer l'air comprimé sortant du compresseur et avant injection dans la chambre de combustion, augmentant ainsi le rendement de la turbine à gaz. Cet échangeur thermique est positionné entre la turbine de détente et la conduite d'échappement et comporte une conduite d'entrée et une conduite de sortie pour l'air comprimé.

La volute à deux volumes selon l'invention peut alors permettre de relier d'une part le compresseur à l'échangeur thermique et d'autre part l'échangeur thermique à la chambre de combustion par l'intermédiaire des conduites d'entrée et de sortie. Ainsi l'air comprimé sortant du compresseur entre dans un premier volume de la conduite circonférentielle par la seconde ouverture, puis se dirige vers la première ouverture avant d'entrer dans la conduite d'entrée de l'échangeur thermique. Ensuite, l'air comprimé réchauffé par son passage dans l'échangeur thermique sort de la conduite de sortie de cet échangeur thermique et entre par la première ouverture dans le second volume de la conduite circonférentielle, puis se dirige vers la seconde ouverture avant d'entrer dans la chambre de combustion de la turbine à gaz.

L'utilisation de cette volute à deux volumes permet ainsi de permettre l'utilisation d'un échangeur thermique sur une turbine à gaz en limitant les pertes de charge subies par l'air comprimé lorsqu'il est conduit vers cet échangeur thermique ainsi que lors de son retour de cet échangeur thermique vers la chambre de combustion.

De plus, l'implantation de cette volute à deux volumes sur une turbine à gaz est plus simple et moins encombrante que l'utilisation de deux conduites indépendantes. En effet, la sortie du compresseur et l'entrée de la chambre de combustion d'une turbine à gaz sont généralement trop proches pour implanter deux conduites indépendantes. De fait, l'utilisation de cette volute à deux volumes favorise la compacité de la turbine à gaz par rapport à l'utilisation de deux conduites indépendantes.

De même, la masse ajoutée par cette volute à deux volumes est réduite.

En outre, les aubes positionnées au niveau de la seconde ouverture circonférentielle peuvent être situées dans la conduite circonférentielle ou bien de préférence à la sortie du compresseur pour limiter les pertes de charge lors du passage d'un écoulement radial à un écoulement tangentiel de l'air comprimé sortant de ce compresseur.

De même, des aubes peuvent être situées dans la conduite circonférentielle ou bien à l'entrée de la chambre de combustion pour limiter les pertes de charge lors du passage d'un écoulement tangentiel à un écoulement radial de l'air comprimé réchauffé entrant dans la chambre de combustion.

Ces aubes peuvent également être situées dans un diffuseur circonférentiel positionné entre le compresseur et la conduite circonférentielle. Ce diffuseur circonférentiel permet de faciliter la transition entre l'écoulement radial d'un fluide en sortie du compresseur et l'écoulement tangentiel de ce fluide dans la conduite circonférentielle.

L'utilisation de cette volute à deux volumes permet également un échange thermique entre l'air comprimé sortant du compresseur et l'air comprimé réchauffé lors de son passage dans l'échangeur thermique par l'intermédiaire de la paroi de cette volute à deux volumes. L'efficacité de cet échange thermique est également augmentée par la circulation à contre courant des deux fluides, c'est-à-dire que l'air comprimé sortant du compresseur circule dans le premier volume en sens inverse par rapport l'air comprimé réchauffé circulant dans le second volume.

En outre, l'invention a aussi pour objet une turbine à gaz équipée d'une telle volute à deux volumes.

Cette turbine à gaz comporte :
- un compresseur par exemple de type compresseur centrifuge comprimant l'air ambiant,
- une chambre de combustion dans laquelle est brûlé un mélange contenant cet air ambiant comprimé et un carburant,
- une turbine de détente qui permet de transformer l'énergie contenue dans les gaz brûlés en énergie mécanique,
- une conduite d'échappement par laquelle les gaz d'échappement sont évacués,
- un échangeur thermique, positionné entre la turbine de détente et la conduite d'échappement, comportant une conduite d'entrée et une conduite de sortie pour l'air comprimé, cet échangeur thermique permettant au gaz d'échappement de réchauffer l'air comprimé en sortie du compresseur et avant injection dans la chambre de combustion, et
- une volute à deux volumes précédemment décrite.

Cette volute à deux volumes relie d'une part le compresseur à la conduite d'entrée de l'échangeur thermique et d'autre part la conduite de sortie de l'échangeur thermique à la chambre de combustion. Ainsi l'air comprimé sortant du compresseur entre dans un premier volume de la conduite circonférentielle par la seconde ouverture, puis se dirige vers la première ouverture avant d'entrer dans la conduite d'entrée de l'échangeur thermique. Ensuite, l'air comprimé réchauffé par son passage dans l'échangeur thermique sort de la conduite de sortie de cet échangeur thermique et entre par la première ouverture dans le second volume de la conduite circonférentielle, puis se dirige vers la seconde ouverture avant d'entrer dans la chambre de combustion de la turbine à gaz.

L'utilisation de cette volute à deux volumes permet ainsi l'utilisation de l'échangeur thermique afin d'augmenter le rendement de la turbine à gaz en limitant les pertes de charge subies par l'air comprimé entre l'échangeur thermique et respectivement le compresseur et la chambre de combustion.

L'utilisation de cette volute à deux volumes permet également un échange thermique entre l'air comprimé sortant du compresseur et l'air comprimé réchauffé lors de son passage dans l'échangeur thermique par l'intermédiaire de la paroi de cette volute à deux volumes.

Une telle turbine à gaz peut notamment être utilisée pour motoriser un aéronef à voilure tournante, tel un hélicoptère.

Enfin, l'invention a aussi pour objet un aéronef à voilure tournante comportant au moins une turbine à gaz précédemment évoquée munie d'une volute à deux volumes.

Par ailleurs, l'échangeur thermique peut être positionné à différents endroits au sein de la turbine à gaz, cette position ayant un impact sur le volume de cette turbine à gaz.

Cet échangeur thermique peut par exemple être positionné en série avec le compresseur, la chambre de combustion et la turbine de détente, c'est-à-dire dans la continuité de ces éléments. Dans ce premier cas, la turbine à gaz est plus longue pour un diamètre sensiblement inchangé.

L'échangeur thermique peut également être positionné en parallèle avec le compresseur, la chambre de combustion et la turbine de détente, une conduite d'échappement intermédiaire reliant la turbine de détente et cet échangeur thermique. Dans ce second cas, les gaz d'échappement traversent la conduite d'échappement intermédiaire et sont orientés vers l'échangeur thermique, qui est alors placé par exemple à côté du compresseur, de la chambre de combustion et de la turbine de détente. Cette conduite d'échappement intermédiaire comprend un coude qui, par sa géométrie adaptée, permet d'assurer l'orientation des gaz d'échappement vers l'échangeur thermique tout en minimisant les pertes de charge. La turbine à gaz a alors un volume plus compact que dans le premier cas, et peut, par exemple, être intégré plus facilement sur un hélicoptère.

La position de cet échangeur thermique peut donc être choisie en fonction du volume disponible pour cette turbine à gaz, notamment dans l'aéronef dans lequel elle doit être utilisée.

Bien que l'objet de l'invention soit, entre autres, de limiter l'apparition des pertes de charge sur l'écoulement de l'air comprimé entre le compresseur et la chambre de combustion, des pertes de charge apparaissent tout de même au sein de l'échangeur thermique, notamment sur les gaz d'échappement. Ces pertes de charge ont alors pour conséquence de réduire les performances de la turbine à gaz. Cette réduction de puissance peut être préjudiciable, notamment dans des phases de vol particulières d'un aéronef à voilure tournante telles que le décollage, l'atterrissage et le vol stationnaire, la baisse de puissance directement liée aux pertes de charge des gaz d'échappement étant de l'ordre de 3 à 8%.

L'échangeur thermique peut alors comporter un système appelé « by-pass » permettant aux gaz d'échappement de traverser cet échangeur thermique en limitant au minimum leurs pertes de charge. Dans ce mode de fonctionnement, l'échangeur thermique ne permet pas de réchauffer l'air comprimé avant injection dans la chambre de combustion mais la turbine à gaz peut alors fournir le maximum de puissance à l'aéronef pour certaines phases de vol particulières.

De plus, afin de résister aux contraintes thermiques et mécaniques tout en assurant l'étanchéité nécessaire au bon fonctionnement de l'échangeur thermique, des soufflets métalliques peuvent être agencés entre l'échangeur thermique et les différents éléments de la turbine à gaz.

En effet, l'échangeur thermique se trouvant dans un environnement à haute température, l'ensemble des composants de l'échangeur thermique et de la turbine à gaz peuvent se dilater. Ces soufflets permettent de pallier ces dilatations. L'environnement de l'échangeur thermique est également soumis à de nombreuses vibrations. Là encore, les soufflets permettent d'absorber ces vibrations.

Ces soufflets peuvent se trouver notamment au niveau de la conduite d'échappement intermédiaire entre la turbine de détente et l'échangeur thermique ainsi qu'au niveau des conduites d'entrée et de sortie de l'échangeur thermique.

L'invention et ses avantages apparaîtront avec plus de détails dans le cadre de la description qui suit avec des exemples de réalisation donnés à titre illustratif en référence aux figures annexées qui représentent :
- les figures 1 et 2, une vue de face et une vue en coupe d'une volute à deux volumes selon l'invention,
- la figure 3, une vue de face d'une variante d'une telle volute à deux volumes, et
- les figures 4 et 5, une turbine à gaz équipée d'une volute à deux volumes.

Les éléments présents dans plusieurs figures distinctes sont affectés d'une seule et même référence.

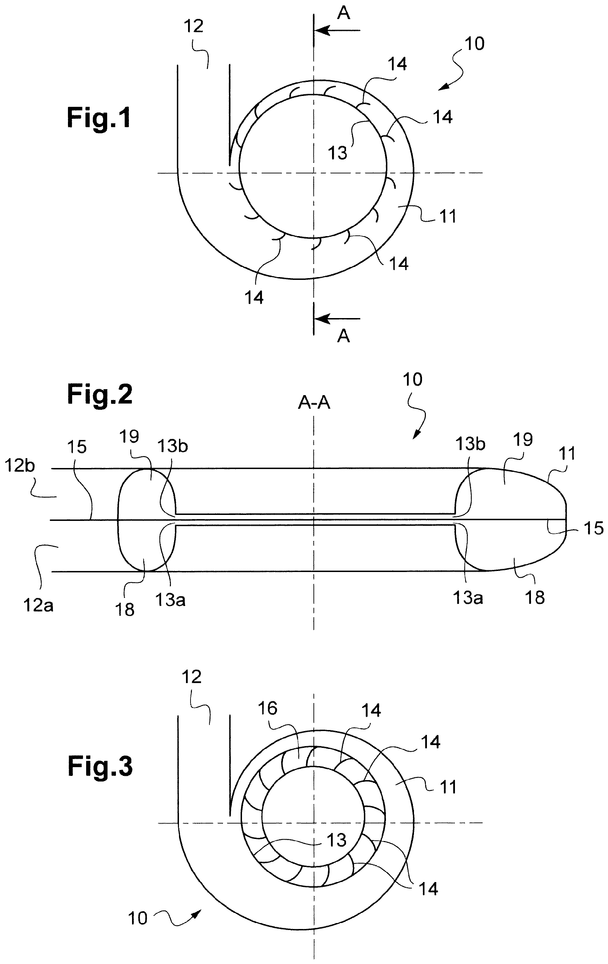

La figure 1 décrit une volute à deux volumes 10 selon l'invention représentée selon une vue de face et la figure 2 représente une vue en coupe selon l'axe A-A de cette volute à deux volumes 10.

Cette volute à deux volumes 10 comporte une conduite circonférentielle 11 en forme de spirale, deux ouvertures 12,13 et une paroi 15 séparant la conduite circonférentielle 11 en deux volumes 18,19 distincts. Une première ouverture 12 est agencée de façon tangentielle à cette conduite circonférentielle 11 vers l'extérieur de cette conduite circonférentielle 11 alors qu'une seconde ouverture 13 circonférentielle est agencée au centre de cette conduite circonférentielle 11. L'intérieur de la conduite circonférentielle 11, où se trouve la seconde ouverture 13, peut avoir une forme cylindrique comme représenté sur la figure 1.

La paroi 15, séparant la conduite circonférentielle 11 en deux volumes 18,19, est représentée sur la figure 2 qui est une coupe selon l'axe A-A de cette volute à deux volumes 10. Cette paroi 15 sépare également les première et seconde ouvertures 12,13 respectivement en deux premières ouvertures 12a,12b et deux secondes ouvertures 13a,13b. Ainsi, le premier volume 18 possède les deux ouvertures 12a,13a alors que le second volume 19 possède les deux ouvertures 12b,13b.

De fait, un premier fluide peut circuler dans le premier volume 18 de cette volute à deux volumes 10 entre les deux ouvertures 12a,13a et un second fluide peut circuler dans le second volume 19 entre les deux ouvertures 12b,13b. Ainsi le premier fluide et le second fluide peuvent circuler indépendamment et de façon isolée dans les deux volumes 18,19 entre la première ouverture 12 et la seconde ouverture 13. De plus, la paroi 15 séparant les deux fluides permet avantageusement un échange thermique entre ces deux fluides.

En outre, la forme en spirale de la conduite circonférentielle 11 permet de transformer d'une part un écoulement linéaire d'un fluide entrant par la première ouverture 12 en un écoulement tangentiel et d'autre part un écoulement radial d'un fluide entrant par la seconde ouverture 13 en un écoulement tangentiel. De même, un écoulement tangentiel d'un fluide circulant dans la conduite circonférentielle 11 est transformé respectivement en un écoulement linéaire au niveau de la première ouverture 12 et en un écoulement radial au niveau de la seconde ouverture 13. Grâce à cette forme particulière en spirale de la conduite circonférentielle 11, ces transformations de l'écoulement du fluide se font tout en limitant les pertes de charge de ce fluide.

De plus, des aubes 14 peuvent être positionnées au niveau de la seconde ouverture 13 circonférentielle afin de faciliter la transformation d'un écoulement radial d'un fluide entrant par la seconde ouverture 13 en un écoulement tangentiel dans la conduite circonférentielle 11. Ainsi ces aubes 14 permettent de réduire également les pertes de charge subies par ce fluide. La position et la forme des aubes peuvent être différentes suivant que la fluide entre ou sort par cette seconde ouverture 13 afin d'optimiser la transformation de l'écoulement de ce fluide.

Ces aubes 14 peuvent également être situées dans un diffuseur 16 circonférentiel positionné au niveau de la seconde ouverture 13, selon la figure 3. Ce diffuseur 16 permet de faciliter la transformation entre l'écoulement radial d'un fluide au niveau de la seconde ouverture 13 et l'écoulement tangentiel de ce fluide dans la conduite circonférentielle 11. Ce diffuseur 16 est placé à l'intérieur de la conduite circonférentielle 11 en amont de la seconde ouverture 13 pour un fluide entrant par la seconde ouverture 13.

Par ailleurs, les deux volumes 18,19 séparés par la paroi 15 peuvent être égaux, voire symétriques, comme représenté sur la figure 2.

La matière utilisée pour fabriquer la conduite circonférentielle 11 ainsi que la paroi 15 est par exemple, mais non exclusivement, l'acier inoxydable ou bien l'Inconel®.

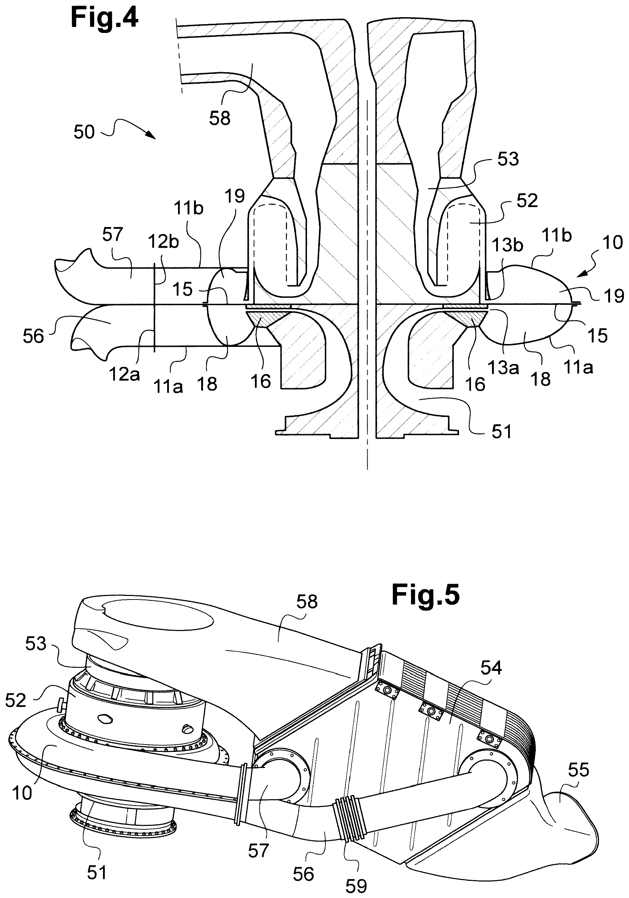

Les figures 4 et 5 représentent une turbine à gaz 50 équipée d'une volute à deux volumes 10 selon l'invention. Cette turbine à gaz 50 peut par exemple être utilisée pour motoriser un aéronef à voilure tournante, tel un hélicoptère. Cette turbine à gaz 50 comporte :
- un compresseur 51 centrifuge comprimant l'air ambiant,
- une chambre de combustion 52 dans laquelle est brûlé un mélange contenant cet air ambiant comprimé et un carburant,
- un diffuseur 16 placé en sortie du compresseur 51,
- une turbine de détente 53 qui permet de transformer l'énergie contenue dans les gaz brûlés en énergie mécanique,
- une conduite d'échappement intermédiaire 58, par laquelle les gaz d'échappement sont dirigés après la turbine de détente 53,
- une conduite d'échappement 55 par laquelle les gaz d'échappement sont évacués,
- un échangeur thermique 54 positionné entre la conduite d'échappement intermédiaire 58 et la conduite d'échappement 55, et
- une volute à deux volumes 10.

Cet échangeur thermique 54 comporte une conduite d'entrée 56 et une conduite de sortie 57 pour l'air comprimé. Cet échangeur thermique 54 est positionné en parallèle avec le compresseur 51, la chambre de combustion 52 et la turbine de détente 53, la conduite d'échappement intermédiaire 58 reliant la turbine de détente 53 et cet échangeur thermique 54.

La volute à deux volumes 10 permet alors de relier d'une part le compresseur 51 à l'échangeur thermique 54 par l'intermédiaire de la conduite d'entrée 56 et d'autre part l'échangeur thermique 54 à la chambre de combustion 52 par l'intermédiaire de la conduite de sortie 57. Ainsi, l'air comprimé sortant du compresseur 51 traverse la seconde ouverture 13a, puis circule dans le premier volume 18 de la conduite circonférentielle 11 avant de se diriger par l'intermédiaire de la première ouverture 12a vers la conduite d'entrée 56 de l'échangeur thermique 54. Ensuite, l'air comprimé réchauffé par son passage dans l'échangeur thermique 54 sort de la conduite de sortie 57 de cet échangeur thermique 54, puis traverse la première ouverture 12b, circule dans le second volume 19 de la conduite circonférentielle 11 avant de se diriger par l'intermédiaire de la seconde ouverture 13b vers la chambre de combustion 52.

Dans cette turbine à gaz 50, les deux fluides circulant respectivement dans les deux volumes 18,19, c'est-à-dire l'air comprimé sortant du compresseur 51 et l'air comprimé réchauffé par l'échangeur thermique 54, sont à des pressions sensiblement égales. De fait, il y a équilibrage de la pression de ces deux fluides de part et d'autre de la paroi 15. De fait, cette paroi 15 travaille peu mécaniquement et peut donc être de faible épaisseur.

Par exemple, cette paroi 15 a une épaisseur comprise entre 0.4 et 0.8mm alors que la conduite circonférentielle 11 a une épaisseur de 0.8mm.

Par suite, cette paroi 15 est mince et permet un échange thermique efficace entre ces deux fluides. De plus, les deux fluides circulent à contre courant dans les deux volumes 18,19 l'air comprimé sortant du compresseur 51 circulant dans le premier volume 18 de la seconde ouverture 13a vers la première ouverture 12a et l'air comprimé réchauffé par l'échangeur thermique 54 circulant dans le second volume 19, de la première ouverture 12b vers la seconde ouverture 13b. L'efficacité de cet échange thermique 54 est également augmentée par cette circulation à contre courant des deux fluides.

L'utilisation de la volute à deux volumes 10 sur cette turbine à gaz 50 permet alors d'une part de limiter les pertes de charge de l'air comprimé lorsqu'il est dirigé et revient de l'échangeur thermique 54 et d'autre part d'améliorer le réchauffement de cet air comprimé. Par suite, le rendement de la turbine à gaz 50 est amélioré par l'utilisation de cette volute à deux volumes 10 sur cette turbine à gaz 50.

Cette volute à deux volumes 10 remplace ainsi deux conduites indépendantes pour alimenter l'échangeur thermique 54 en air comprimé générant ainsi une réduction de masse ainsi que de l'encombrement. De plus, l'implantation de cette seule volute à deux volumes 10 sur la turbine à gaz 50 est plus simple que pour l'utilisation de deux conduites indépendantes.

En outre, des aubes 14 peuvent être situées, au niveau de la seconde ouverture 13a dans la conduite circonférentielle 11 ou bien de préférence dans le diffuseur 16.

De même, des aubes 14 peuvent également être utilisées au niveau de la seconde ouverture 13b. Ces aubes 14 sont alors situées dans la conduite circonférentielle 11 ou bien à l'entrée de la chambre de combustion 52.

Par ailleurs, selon la figure 4, la conduite circonférentielle 11 est composée de deux demi-conduites circonférentielles 11a,11b en forme de spirale, reliées l'une à l'autre au niveau de la paroi 15. Deux demi-conduites circonférentielles 11a,11b sont en effet plus faciles à mettre en forme et à assembler avec la paroi 15.

Enfin, afin de résister aux contraintes thermiques et mécaniques tout en assurant l'étanchéité nécessaire au bon fonctionnement de l'échangeur thermique 54, des soufflets métalliques 59 sont agencés entre l'échangeur thermique 54 et la volute à deux volumes 10, notamment sur la conduite d'entrée 56 de l'échangeur thermique 54.

Ces soufflets métalliques 59 permettent d'absorber les vibrations et les dilatations auxquelles sont soumis les éléments de la turbine à gaz et en particulier l'échangeur thermique 54. De tels soufflets métalliques peuvent également se trouver au niveau de la conduite d'échappement intermédiaire 58 et de la conduite de sortie 57 de l'échangeur thermique 54.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Volute à deux volumes (10) pour turbine à gaz (50) comportant,
- une conduite circonférentielle (11) en forme de spirale,
- une première ouverture (12) agencée de façon tangentielle à ladite conduite circonférentielle (11) vers l'extérieur de ladite conduite circonférentielle (11), et
- une seconde ouverture (13) circonférentielle agencée au centre de ladite conduite circonférentielle (11),
**caractérisée en ce que** ladite volute à deux volumes (10) comporte une paroi (15) séparant ladite conduite circonférentielle (11) en deux volumes (18,19) distincts, ladite paroi (15) séparant également lesdites première et seconde ouvertures (12,13) respectivement en deux premières ouvertures (12a,12b) et en deux secondes ouvertures (13a,13b), un premier fluide et un second fluide pouvant circuler indépendamment et de façon isolée entre ladite première ouverture (12) et ladite seconde ouverture (13).

2. Volute à deux volumes (10) selon la revendication 1,
**caractérisée en ce que** ladite conduite circonférentielle (11) est en forme de goutte d'eau.

3. Volute à deux volumes (10) selon l'une quelconque des revendications 1 à 2,
**caractérisée en ce que** lesdits deux volumes (18,19) sont égaux et symétriques.

4. Volute à deux volumes (10) selon l'une quelconque des revendications 1 à 3,
**caractérisée en ce que** ladite paroi (15) permet un échange thermique entre un premier fluide et un second fluide circulant respectivement dans lesdits deux volumes (18,19) de ladite conduite circonférentielle (11).

5. Volute à deux volumes (10) selon l'une quelconque des revendications 1 à 4,
**caractérisée en ce que** des aubes (14) sont positionnées au niveau de ladite seconde ouverture (13) circonférentielle afin de faciliter la transformation entre un écoulement radial d'un fluide au niveau de ladite seconde ouverture 13 et un écoulement tangentiel dudit fluide dans ladite conduite circonférentielle (11).

6. Volute à deux volumes (10) selon l'une quelconque des revendications 1 à 5,
**caractérisée en ce que** ladite volute à deux volumes (10) comporte un diffuseur (16) positionné à l'intérieur de ladite conduite circonférentielle (11) et en amont de ladite seconde ouverture (13) pour un fluide entrant par ladite seconde ouverture (13).

7. Volute à deux volumes (10) selon la revendication 6,
**caractérisée en ce que** des aubes (14) sont positionnées dans ledit diffuseur (16) afin de faciliter la transformation entre un écoulement radial d'un fluide au niveau de ladite seconde ouverture 13 et un écoulement tangentiel dudit fluide dans ladite conduite circonférentielle (11).

8. Turbine à gaz (50), comprenant :
- un compresseur (51),
- une chambre de combustion (52),
- une turbine de détente (53) des gaz brûlés,
- un échangeur thermique (54) permettant au gaz d'échappement de réchauffer l'air comprimé en sortie dudit compresseur (51) et avant injection dans ladite chambre de combustion (52), ledit échangeur thermique (54) comportant une conduite d'entrée (56) et une conduite de sortie (57) pour l'air comprimé, et
- une conduite d'échappement (55)
**caractérisée en ce que** ladite turbine à gaz (50) comporte une volute à deux volumes (10) selon l'une quelconque des revendications 1 à 7, ladite première ouverture (12) étant reliée auxdites conduites d'entrée (56) et de sortie (57), ladite seconde ouverture (13) étant reliée audit compresseur (51) et à ladite chambre de combustion (52), ledit premier volume (18) étant relié audit compresseur (51) et à ladite conduite d'entrée (56), ledit second volume (19) étant relié à ladite conduite de sortie (57) et à ladite chambre de combustion (52).

9. Turbine à gaz (50) selon la revendication 8,
**caractérisée en ce que** ledit échangeur thermique (54) est positionné en série avec ledit compresseur (51), ladite chambre de combustion (52) et ladite turbine de détente (53).

10. Turbine à gaz (50) selon la revendication 8,
**caractérisée en ce que** ledit échangeur thermique (54) est positionné en parallèle avec ledit compresseur (51), ladite chambre de combustion (52) et ladite turbine de détente (53).

11. Aéronef à voilure tournante,
**caractérisé en ce que** ledit aéronef comporte au moins une turbine à gaz (50) selon l'une quelconque des revendications 8 à 10.

## Patentansprüche

1. Spiralgehäuse mit zwei Volumina (10) für eine Gasturbine (50), umfassend,
- eine spiralförmige Umfangsleitung (11),
- eine erste Öffnung (12), die tangential zu der Umfangsleitung (11) zur Außenseite der Umfangsleitung (11) ausgebildet ist, und
- eine zweite Umfangsöffnung (13), die in der Mitte der Umfangsleitung (11) ausgebildet ist,
**dadurch gekennzeichnet, dass** das Spiralgehäuse mit zwei Volumina (10) eine Wand (15) aufweist, die die Umfangsleitung (11) in zwei unterschiedliche Volumina (18, 19) trennt, wobei die Wand (15) auch die erste und die zweite Öffnung (12, 13) jeweils in zwei erste Öffnungen (12a, 12b) und zwei zweite Öffnungen (13a, 13b) trennt, wobei eine erste Flüssigkeit und eine zweite Flüssigkeit unabhängig voneinander und isoliert zwischen der ersten Öffnung (12) und der zweiten Öffnung (13) zirkulieren können.

2. Spiralgehäuse mit zwei Volumina (10) nach Anspruch 1,
**dadurch gekennzeichnet, dass** die Umfangsleitung (11) die Form eines Wassertropfens aufweist.

3. Spiralgehäuse mit zwei Volumina (10) nach einem der Ansprüche 1 bis 2,
**dadurch gekennzeichnet, dass** die zwei Volumina (18, 19) gleich und symmetrisch sind.

4. Spiralgehäuse mit zwei Volumina (10) nach einem der Ansprüche 1 bis 3,
**dadurch gekennzeichnet, dass** die Wand (15) einen Wärmeaustausch zwischen einer ersten Flüssigkeit und einer zweiten Flüssigkeit ermöglicht, die jeweils in den zwei Volumina (18, 19) der Umfangsleitung (11) zirkulieren.

5. Spiralgehäuse mit zwei Volumina (10) nach einem der Ansprüche 1 bis 4,
**dadurch gekennzeichnet, dass** Schaufeln (14) auf Ebene der zweiten Umfangsöffnung (13) angeordnet sind, um das Umwandeln zwischen einer radialen Strömung einer Flüssigkeit auf Ebene der zweiten Öffnung (13) und einer tangentialen Strömung der Flüssigkeit in der Umfangsleitung (11) zu erleichtern.

6. Spiralgehäuse mit zwei Volumina (10) nach einem der Ansprüche 1 bis 5,
**dadurch gekennzeichnet, dass** das Spiralgehäuse mit zwei Volumina (10) einen Diffusor (16) aufweist, der im Inneren der Umfangsleitung (11) und vorgelagert vor der zweiten Öffnung (13) für eine Flüssigkeit, die durch die zweite Öffnung (13) eintritt, angeordnet ist.

7. Spiralgehäuse mit zwei Volumina (10) nach Anspruch 6,
**dadurch gekennzeichnet, dass** Schaufeln (14) im Inneren des Diffusors (16) angeordnet sind, um das Umwandeln zwischen einer radialen Strömung einer Flüssigkeit auf Ebene der zweiten Öffnung (13) und einer tangentialen Strömung der Flüssigkeit in der Umfangsleitung (11) zu erleichtern.

8. Gasturbine (50), umfassend:
- einen Kompressor (51),
- eine Brennkammer (52),
- eine Expansionsturbine (53) der verbrannten Gase,
- einen Wärmetauscher (54), der dem Abgas ermöglicht, die komprimierte Luft am Ausgang des Kompressors (51) und vor dem Einspritzen in die Brennkammer (52) zu erhitzen, wobei der Wärmetauscher (54) eine Eingangsleitung (56) und eine Ausgangsleitung (57) für die komprimierte Luft aufweist, und
- eine Abgasleitung (55)
**dadurch gekennzeichnet, dass** die Gasturbine (50) ein Spiralgehäuse mit zwei Volumina (10) nach einem der Ansprüche 1 bis 7 aufweist, wobei die erste Öffnung (12) mit der Eingangsleitung (56) und der Ausgangsleitung (57) verbunden ist, wobei die zweite Öffnung (13) mit dem Kompressor (51) und der Brennkammer (52) verbunden ist, wobei das erste Volumen (18) mit dem Kompressor (51) und der Eingangsleitung (56) verbunden ist, wobei das zweite Volumen (19) mit der Ausgangsleitung (57) und der Brennkammer (52) verbunden ist.

9. Gasturbine (50) nach Anspruch 8,
**dadurch gekennzeichnet, dass** der Wärmetauscher (54) in Reihe mit dem Kompressor (51), der Brennkammer (52) und der Expansionsturbine (53) angeordnet ist.

10. Gasturbine (50) nach Anspruch 8,
**dadurch gekennzeichnet, dass** der Wärmetauscher (54) parallel mit dem Kompressor (51), der Brennkammer (52) und der Expansionsturbine (53) angeordnet ist.

11. Drehflügelflugzeug, **dadurch gekennzeichnet, dass** das Flugzeug mindestens eine Gasturbine (50) nach einem der Ansprüche 8 bis 10 aufweist.

## Claims

1. Volute with two chambers (10) for a gas turbine (50), having:
- a circumferential conduit (11) in the form of a spiral,
- a first opening (12) arranged tangentially to said circumferential conduit (11) towards the exterior of said circumferential conduit (11), and
- a second circumferential opening (13) arranged at the centre of said circumferential conduit (11),
**characterised in that** said volute with two chambers (10) has a wall (15) separating said circumferential conduit (11) into two distinct chambers (18, 19), said wall (15) also separating said first and second openings (12, 13) respectively into two first openings (12a, 12b) and into two second openings (13a, 13b), a first fluid and a second fluid being able to circulate independently and in an isolated manner between said first opening (12) and said second opening (13).

2. Volute with two chambers (10) according to claim 1,
**characterised in that** said circumferential conduit (11) is in the form of a water droplet.

3. Volute with two chambers (10) according to any one of claims 1 to 2,
**characterised in that** said two chambers (18, 19) are equal and symmetrical.

4. Volute with two chambers (10) according to any one of claims 1 to 3,
**characterised in that** said wall (15) enables a heat exchange between a first fluid and a second fluid circulating respectively in said two chambers (18, 19) of said circumferential conduit (11).

5. Volute with two chambers (10) according to any one of claims 1 to 4,
**characterised in that** blades (14) are positioned at said second circumferential opening (13) in order to facilitate the transformation between a radial flow of a fluid at said second opening (13) and a tangential flow of said fluid in said circumferential conduit (11).

6. Volute with two chambers (10) according to any one of claims 1 to 5,
**characterised in that** said volute with two chambers (10) has a diffuser (16) positioned inside said circumferential conduit (11) and upstream of said second opening (13) for a fluid entering by said second opening (13).

7. Volute with two chambers (10) according to claim 6,
**characterised in that** blades (14) are positioned in said diffuser (16) in order to facilitate the transformation between a radial flow of a fluid at said second opening (13) and a tangential flow of said fluid in said circumferential conduit (11).

8. Gas turbine (50), comprising:
- a compressor (51),
- a combustion chamber (52),
- an expansion turbine (53) for burned gases,
- a heat exchanger (54) enabling exhaust gas to heat compressed air at the outlet of said compressor (51) and prior to injection into said combustion chamber (52), said heat exchanger (54) having an inlet conduit (56) and an outlet conduit (57) for the compressed air, and
- an exhaust conduit (55)
**characterised in that** said gas turbine (50) has a volute with two chambers (10) according to any one of claims 1 to 7, said first opening (12) being connected to said inlet (56) and outlet (57) conduits, said second opening (13) being connected to said compressor (51) and to said combustion chamber (52), said first chamber (18) being connected to said compressor (51) and to said inlet conduit (56), said second chamber (19) being connected to said outlet conduit (57) and to said combustion chamber (52).

9. Gas turbine (50) according to claim 8,
**characterised in that** said heat exchanger (54) is positioned in series with said compressor (51), said combustion chamber (52) and said expansion turbine (53).

10. Gas turbine (50) according to claim 8,
**characterised in that** said heat exchanger (54) is positioned in parallel with said compressor (51), said combustion chamber (52) and said expansion turbine (53).

11. Rotary-wing aircraft, **characterised in that** said aircraft has at least one gas turbine (50) according to any one of claims 8 to 10.
